# EUROPÄISCHE PATENTSCHRIFT

(11) **EP 3 233 676 B1**
(45) Veröffentlichungstag und Bekanntmachung des Hinweises auf die Patenterteilung: **26.01.2022**
(21) Anmeldenummer: 15813412.2
(22) Anmeldetag: 17.12.2015
(51) Int. Cl.: B65G 54/02, B65G 35/06

(54) **BEWEGUNGSVORRICHTUNG MIT BETRIEBS- UND WARTUNGSKONFIGURATION**
MOVING DEVICE HAVING AN OPERATING CONFIGURATION AND A MAINTENANCE CONFIGURATION
DISPOSITIF DE DÉPLACEMENT COMPRENANT UNE CONFIGURATION DE FONCTIONNEMENT ET D'ENTRETIEN

(30) Priorität: 22.12.2014 DE 102014119352
(43) Veröffentlichungstag der Anmeldung: 25.10.2017
(73) Patentinhaber: Weber Maschinenbau GmbH Breidenbach, 35236 Breidenbach (DE)
(72) Erfinder: BURK, Alexander, 35232 Dautphetal (DE); ECKHARDT, Christoph, 35236 Breidenbach (DE); GERLACH, Jochen, 35232 Dautphetal (DE); NICHAU, Marco, 57334 Bad Laasphe (DE); NISPEL, Thomas, 35232 Dautphetal (DE); ROTHER, Ingo, 35236 Breidenbach (DE); VON KEUDELL, Leopold, 88682 Salem (DE); ZECHER, Steffen, 35460 Staufenberg (DE)
(74) Vertreter: Manitz Finsterwald Patent- und Rechtsanwaltspartnerschaft mbB
(86) Internationale Anmeldenummer: PCT/EP2015/080294
(87) Internationale Veröffentlichungsnummer: WO 2016/102317

(56) Entgegenhaltungen:
- EP-A1- 2 392 524
- EP-A1- 2 779 432
- EP-A2- 1 130 191
- EP-B1- 2 779 432
- WO-A1-2013/034534
- DE-C- 627 334
- DE-C- 664 323
- GB-A- 276 445
- JP-A- S 606 523
- JP-A- S6 115 559
- US-A- 1 333 877
- US-A- 3 850 691
- US-A- 4 230 045

## Beschreibung

Die vorliegende Erfindung betrifft eine Vorrichtung zum Bewegen von Objekten. Bei den Objekten kann es sich insbesondere um Lebensmittelprodukte handeln, beispielsweise um Portionen, die eine oder mehrere Scheiben umfassen, welche mittels einer Aufschneidevorrichtung, z.B. eines Hochgeschwindigkeits-Slicers, von einem Lebensmittelprodukt, z.B. Wurst oder Käse, abgetrennt wurden. Die Erfindung ist aber nicht auf dieses Gebiet beschränkt.

Die Bewegungsvorrichtung umfasst eine Mehrzahl bewegbarer Transportmover zum Transport der Objekte. Ferner umfasst die Bewegungsvorrichtung ein Bahnsystem für die Transportmover, in welchem die Transportmover entlang wenigstens einer vorgegebenen Bahn in einer Transportrichtung bewegbar sind, und eine Steuereinrichtung zum Steuern der Bewegungen der Transportmover in dem Bahnsystem. Die Bahn umfasst einen Stator und eine zugeordnete Führung für die Transportmover. Der Antrieb für die Transportmover kann beispielsweise als Linearmotor ausgebildet sein, insbesondere als linearer Synchronmotor oder als linearer Induktionsmotor.

Ein Transportsystem, das dem Oberbegriff von Ansprüche 1, 9 und 11 entspricht, ist beispielsweise in der EP 2 779 432 A1 offenbart.

Derartige Linearmotoren sind im Zusammenhang mit einer Vielzahl von Anwendungen grundsätzlich bekannt. Von Vorteil ist ein derartiges Antriebsprinzip unter anderem dann, wenn vergleichsweise geringe Lasten zu transportieren sind.

Ein der Erfindung zugrunde liegendes Transportsystem, auf das hiermit im Hinblick auf das Erfordernis der Ausführbarkeit der Erfindung ausdrücklich Bezug genommen wird, wird von der Firma MagneMotion Inc. mit Sitz in Devens, Massachusetts, USA, angeboten. Dieses System basiert auf einem sogenannten LSM-Antrieb, also auf einem Antrieb durch lineare Synchronmotoren, der von einem sogenannten linearen Induktionsmotor (LIM-Antrieb) zu unterscheiden ist. Im Unterschied zu einem LIM-Antrieb wird bei einem LSM-Antrieb ein Magnetfeld nicht mittels des sogenannten elektromagnetischen Wanderfeldes induziert, sondern das Magnetfeld wird durch Permanentmagnete bereitgestellt. Wenn der Läufer des Linearmotors die Permanentmagnete trägt und der Stator des Linearmotors das elektromagnetische Wanderfeld erzeugt, dann kann man sich das Antriebsprinzip eines LSM-Antriebs bildlich so vorstellen, dass der mit dem Permanentmagneten versehene Transportmover von dem sich längs des Stators bewegenden Magnetfeld über die Transportstrecke gezogen wird. Ein solches Transportsystem bzw. Antriebsprinzip ist beispielsweise in WO 2003/029651 A2 und WO 2010/085670 A1 beschrieben. Auf diese Dokumente wird hiermit bezüglich der Offenbarung eines möglichen Antriebs- bzw. Funktionsprinzips für die Erfindung ausdrücklich Bezug genommen.

Das Bahnsystem bzw. die einzelnen Bahnen eines solchen Transportsystems können in eine Vielzahl aufeinanderfolgender Bahnelemente unterteilt werden, die gewissermaßen jeweils einen Einzel-Linearmotor bilden und von einer Steuereinrichtung individuell ansteuerbar sind. Wenn gleichzeitig die im Bahnsystem befindlichen Transportmover mittels der Steuereinrichtung identifizierbar sind, dann können auf diese Weise grundsätzlich beliebig viele Transportmover gleichzeitig in einem grundsätzlich beliebig komplexen Bahnsystem betrieben und dabei individuell bewegt werden.

Für die Identifizierung bzw. Lokalisierung der einzelnen Transportmover im Bahnsystem verwendet die vorstehend erwähnte Firma MagneMotion Inc. eine Technik, bei der jeder Transportmover mit einem Transducer versehen ist, der in den vom Bahnsystem gebildeten Stator ein Signal induziert, wodurch es der Steuereinrichtung ermöglicht wird, die exakte Position des Transportmovers mit einer von der Größe des Gesamtsystems abhängigen Genauigkeit von Bruchteilen eines Millimeters oder Bruchteilen eines Zentimeters zu bestimmen. Ein Vorteil dieses Systems besteht darin, dass keine externen Sensoren benötigt werden. Bei dem Steuersystem der Firma MagneMotion Inc. ist außerdem durch eine Unterteilung der Bahnen in eine Vielzahl von - gewissermaßen jeweils einen Einzel-Linearmotor darstellenden - Bahnelementen sichergestellt, dass keine Kollisionen zwischen aufeinanderfolgenden Transportmovern auftreten. So kann ein Transportmover nur dann in das nächste Bahnelement einfahren, wenn dies von der Steuereinrichtung gestattet wird, was insbesondere dann nicht der Fall ist, wenn sich ein anderer Transportmover in dem Bahnelement befindet.

Vor dem Hintergrund dieses grundsätzlich bekannten Transportsystems ist bei der Erfindung in einem möglichen Ausführungsbeispiel vorgesehen, dass das Bahnsystem als Stator des Linearmotors ausgebildet ist.

Ein Nachteil des oben beschriebenen Transportsystems ist es, dass die Transportmover von mindestens einer Führung geführt werden, welche mit dem nichtbeweglichen Teil des Transportsystems, im Nachfolgenden als Stator bezeichnet, verbunden ist, wobei eine einfache Demontage der Führung nicht vorgesehen und in den herkömmlichen, bisher üblichen Anwendungen dieses Transportsystems auch nicht erforderlich ist. Daher ist es bei herkömmlichen Bahnsystemen zur Wartung der Bahn notwendig, dass die Bahn aufwendig unter hohem Zeit- und Arbeitsaufwand demontiert werden muss. Hierdurch ergeben sich lange Standzeiten des Transportsystems, was wiederum hohe Kosten zur Folge hat. Außerdem ist entsprechend eingewiesenes Personal erforderlich, das insbesondere in der Lage ist, beispielsweise bei der nach einer Wartung erfolgenden erneuten Montage die notwendigen Toleranzen einzuhalten, damit das Bahnsystem wieder einwandfrei funktioniert.

Herkömmliche Bahnsysteme sind Verschmutzungen ungeschützt ausgesetzt. So können im Lebensmittelsektor beispielsweise Schneidreste oder Schneidabfälle auf die Bahn gelangen. Bei anderen Anwendungen können beispielsweise Papierreste, Holzspäne, Metallteile, z.B. Schraubenteile, oder Plastikreste auf die Bahn gelangen. Die Bahn weist insbesondere eine Führung für die Transportmover auf, welche eine oder mehrere Schienen umfassen kann. Insbesondere kann eine Führung ein Paar von parallelen Schienen umfassen. Wird die Verschmutzung insbesondere im Bereich der Schienen zu groß, können sich die Transportmover nicht mehr ungehindert auf der Bahn bewegen.

Es ist daher eine Aufgabe der Erfindung, eine Bewegungsvorrichtung für Objekte dahingehend zu verbessern, dass auf einfache Weise Verschmutzungen zumindest aus einem Teilbereich der Bahn entfernt werden können und eine unter hygienischen Gesichtspunkten gründliche Reinigung erfolgen kann.

Die Lösung dieser Aufgabe erfolgt durch eine Vorrichtung mit den Merkmalen der Ansprüche 1 und 9.

Erfindungsgemäß ist die Bahn zumindest in einem, insbesondere verschmutzungsgefährdeten, Teilbereich wenigstens abschnittsweise von einer Betriebskonfiguration in eine Wartungskonfiguration überführbar. In der Wartungskonfiguration ist zumindest eine Komponente der Bahn aus ihrer einem Transportbetrieb entsprechenden Arbeitsstellung relativ zum Stator herausbewegt. Insbesondere kann in der Wartungsstellung die Komponente der Bahn so aus ihrer Arbeitsstellung herausbewegt sein, dass die Bahn für Wartungsarbeiten, insbesondere für Reinigungsarbeiten, besser zugänglich ist. Außerdem ist es vorgesehen, dass die Komponente in der Arbeitsstellung ohne zusätzliche mechanische Verbindungsmittel, insbesondere an einer ihr zugeordneten Aufnahme an der Bahn, fixiert ist und/oder dass eine in der Arbeitsstellung wirksame Fixierung der Komponente werkzeuglos lösbar ist.

Weiterbildungen der Erfindung sind auch den abhängigen Ansprüchen, der Beschreibung sowie den beigefügten Zeichnungen zu entnehmen.

Gemäß einer bevorzugten Ausführungsform handelt es sich bei der Komponente um die Führung oder zumindest um einen Teil der Führung.

Nach einer weiteren Ausführungsform ist die Komponente sowohl in ihrer der Betriebskonfiguration der Bahn entsprechenden Arbeitsstellung als auch in einer der Wartungskonfiguration der Bahn entsprechenden Wartungsstellung, insbesondere mit dem Stator, verbunden und zwischen der Arbeitsstellung und der Wartungsstellung verstellbar, insbesondere durch eine Verstellbewegung, die zumindest eine reine Schwenk- oder Linearbewegung und/oder die eine kombinierte Freigabe- und Stellbewegung umfasst.

Gemäß einer weiteren Ausführungsform ist eine, insbesondere Formschlussmittel umfassende, Positionierhilfe vorgesehen, durch welche eine Sollposition der Komponente in der Arbeitsstellung vorgegeben und insbesondere gesichert ist. Hierdurch ist ein Wechsel der Komponente zwischen Arbeitsstellung und Wartungsstellung besonders leicht möglich.

Gemäß einer weiteren Ausführungsform erfolgt eine Fixierung der Komponente in der Arbeitsstellung durch magnetische Kräfte, durch eine Rast-, Steck-, Klemm- oder Schnappverbindung, oder durch eine Gelenkverbindung, wobei insbesondere die Fixierung der Komponente zumindest auch durch ihr Eigengewicht bewirkt wird.

Nach einer weiteren Ausführungsform ist die Bahn so ausgestaltet, dass sich die Bahn zumindest in einem Teilbereich in mehrere lösbar miteinander verbundene Bahnabschnitte untergliedert, wobei die Führungen unmittelbar aufeinander folgender Bahnabschnitte jeweils durch wenigstens eine Überbrückung miteinander verbunden sind, und wobei die Überbrückungen jeweils werkzeuglos lösbar sind.

Bevorzugt ist es, wenn sich die Führungen in einem zusammenhängenden Teilbereich der Bahn, welcher zum Beispiel eine Kurve darstellt, gleichzeitig aus der Arbeitsstellung herausbewegen lassen. Ein zusammenhängender Teilbereich kann beispielsweise auch benachbarte, in Bahnrichtung orientierte Führungen und/oder parallele Führungen auf gegenüberliegenden Seiten der Bahn bzw. des betreffenden Bahnabschnitts umfassen.

Es kann weiterhin vorgesehen sein, dass für das Lösen der Überbrückungen einerseits und das Herausbewegen der Komponente aus der Arbeitsstellung heraus andererseits ein gemeinsamer Mechanismus vorgesehen ist.

Gemäß einer weiteren Ausführungsform ist die Bahn zumindest in einem Teilbereich in mehrere lösbar miteinander verbundene Bahnabschnitte untergliedert, die jeweils zumindest einen Stator und eine Führung aufweisen, wobei die Führungen zumindest einiger Bahnabschnitte gemeinsam aus der Arbeitsstellung herausbewegbar sind.

Nach einer weiteren Ausführungsform untergliedert sich die Bahn zumindest in einem Teilbereich in mehrere lösbar miteinander verbundene Bahnabschnitte, die jeweils zumindest einen Stator und eine Führung aufweisen, wobei die Führungen zumindest einiger Bahnabschnitte unabhängig voneinander aus der Arbeitsstellung herausbewegbar sind. Hierdurch ist es prinzipiell möglich, einige Bahnabschnitte zu Warten, während andere Bahnabschnitte weiter betrieben werden. Gemäß einer weiteren Ausführungsform kann vorgesehen sein, dass eine oder die Steuereinrichtung zu einer Zustandsüberwachung zumindest eines Bahnabschnitts ausgebildet ist, wobei die Steuereinrichtung zu einer Unterscheidung zwischen der Betriebskonfiguration und der Wartungskonfiguration sowie zur Einleitung vorgegebener Maßnahmen in Abhängigkeit von dem jeweils erfassten Zustand in der Lage ist.

Eine Maßnahme kann z.B. darin bestehen, nach dem Überführen eines Bahnabschnitts in die Wartungskonfiguration, z.B. nach dem Wegschwenken einer Führung, eine wie auch immer geartete Blockade stromaufwärts und/oder stromabwärts des betreffenden Bahnabschnitts für die Transportmover einzurichten, um ein Einfahren der Transportmover in den gerade zu wartenden Bahnabschnitt zu verhindern. Die Blockade kann rein steuerungstechnisch erfolgen. Alternativ oder zusätzlich ist es auch möglich, Blockademittel z.B. in Form einer wie auch immer gearteten Störkontur von Hand durch einen Benutzer in den Weg der Transportmover zu bringen, durch welche diese zum Anhalten veranlasst werden, indem z.B. das Etablieren der Störkontur zu einer entsprechende Meldung in der Steuereinrichtung führt, die daraufhin den zu wartenden Bahnabschnitt steuerungstechnisch. Dieses Sperren erfolgt also nicht programmiertechnisch direkt an der Steuereinrichtung, sondern indirekt durch Etablieren einer detektierbaren Störung. Alternativ kann auch z.B. das Überführen in die Wartungskonfiguration selbst für eine entsprechende Sperrmeldung an die Steuereinrichtung erzeugen. So kann insbesondere verhindert werden, dass Transportmover während einer Wartung auf den Boden fallen.

Gemäß noch einem weiteren Aspekt der Erfindung, der im unabhängigen Anspruch 9 definiert ist und der ebenfalls mit allen hierin offenbarten Aspekten der Erfindung kombiniert werden kann, ist vorgesehen, dass zumindest die Führung der Bahn eine Mehrzahl von Führungsabschnitten umfasst, wobei zumindest ein Führungsabschnitt dazu ausgebildet ist, während des Transportbetriebs für die Transportmover zumindest ein Betriebsmittel, insbesondere ein Spülmittel, Reinigungsmittel oder Desinfektionsmittel, bereit zu stellen.

Auf diese Weise kann ein ohnehin in die Bahn integrierter Abschnitt dazu verwendet werden, ein oder mehrere unterschiedliche, für den Transportbetrieb erforderliche oder den Transportbetrieb verbessernde Betriebsmittel zur Verfügung zu stellen.

Gemäß einer Ausgestaltung dieses Aspektes ist vorgesehen, dass der Führungsabschnitt einen Betriebsmittelvorrat beinhaltet. Alternativ oder zusätzlich kann der Führungsabschnitt an eine Betriebsmittelzufuhr angeschlossen oder anschließbar sein.

Des Weiteren kann vorgesehen sein, dass der Führungsabschnitt zur Abgabe des Betriebsmittels zumindest bereichsweise mit Abgabeöffnungen versehen und/oder porig ausgebildet ist.

Ein Führungsabschnitt gemäß einer dieser Ausgestaltungen kann mehrfach innerhalb des Bahnsystems vorgesehen sein. Die Anzahl derartiger Führungsabschnitte sowie deren Anordnung kann in Abhängigkeit von dem konkreten Bahnsystem erfolgen. Beispielsweise kann vor bekannten lokalen Reibungsproblemstellen und vor Bereichen mit beladenen, also vergleichsweise schweren Transportmovern ein Führungsabschnitt vorgesehen sein, der zur Bereitstellung eines Schmiermittels ausgebildet ist.

Der zur Bereitstellung des Betriebsmittels ausgebildete Führungsabschnitt kann als Modul ausgebildet sein und eine an ein vorhandenes Längenraster des Bahnsystems angepasste Länge aufweisen. Der Führungsabschnitt kann im Rahmen eines Bahnsystems mit Bahnabschnitten der Länge 25 cm, 50 cm und 100 cm folglich z.B. eine Länge von 25 cm aufweisen.

Insbesondere dann, wenn der Führungsabschnitt einen Betriebsmittelvorrat beinhaltet, kann der Führungsabschnitt auswechselbar gestaltet sein.

Bei einem Schmiermittel kann es sich beispielsweise um einen speziellen Kunststoff oder um ein Sintermaterial handeln.

Wenn der Führungsabschnitt dazu ausgelegt ist, an einen externen Betriebsmittelvorrat angeschlossen zu werden, dann kann vorgesehen sein, dass ein Nachführen des Betriebsmittels selbständig erfolgt, beispielsweise durch ein Gefälle oder durch einen Druckausgleich. Dabei kann eine Steuerung über ein Nachführventil erfolgen. Alternativ ist auch eine automatisch gesteuerte Betriebsmittelzufuhr, z.B. mittels einer Pumpe oder eines Dosiersystems, möglich.

Zumindest ein Bereich des Führungsabschnitts, der dazu dient, das Betriebsmittel nach außen abzugeben, kann eine oder mehrere Abgabeöffnungen, z.B. in Form eines Kanals oder eines Durchbruchs, aufweisen. Alternativ oder zusätzlich kann zumindest ein Teil des Führungsabschnitts aus einem porigen Material bestehen, bei dem es sich beispielsweise um ein Sintermaterial handelt. Die Porosität dieses Teils des Führungsabschnitts reicht bis an dessen Oberfläche, damit das Betriebsmittel an dieser Oberfläche zur Verfügung steht bzw. abgegeben werden kann.

Vorzugsweise sind jene Seiten oder Flächen des Führungsabschnitts dazu ausgebildet, das Betriebsmittel, z.B. ein Schmiermittel, nach außen abzugeben, die im Transportbetrieb von den entlang der Bahn bewegten Transportmovern berührt werden. Solche Seiten bzw. Flächen, die zu keinem Zeitpunkt in Kontakt mit den Transportmovern stehen, besitzen vorzugsweise Oberflächen, die geschlossen und/oder abgedichtet sind.

Vorzugsweise handelt es sich bei dem Betriebsmittel um eine Fluid, welches für die Verwendung im Lebensmittelbereich zugelassen ist.

Wie bereits erwähnt, kann das Betriebsmittel ein Schmiermittel sein. Der hierin erläuterte erfindungsgemäße Aspekt kann alternativ oder zusätzlich auch zur Bereitstellung eines Reinigungsmittels oder eines Desinfektionsmittels dienen.

Die vorliegende Erfindung betrifft auch einen Bahnabschnitt einer Bahn für eine erfindungsgemäße Vorrichtung, insbesondere eine Vorrichtung nach zumindest einer der vorhergehenden Ausführungsformen. Insbesondere kann dieser Bahnabschnitt entsprechend den vorstehend erläuterten Ausführungsformen ausgebildet sein.

Die Erfindung wird im Folgenden beispielhaft unter Bezugnahme auf die Zeichnungen beschrieben. Es zeigen:
- Fig. 1: eine Schnittansicht einer Ausführungsform einer erfindungsgemäßen Bewegungsvorrichtung,
- Fig. 2a und 2b: Schnittansichten einer Ausführungsform einer erfindungsgemäßen Bewegungsvorrichtung, in Fig. 2a in der Betriebskonfiguration und in Fig. 2b in der Wartungskonfiguration,
- Fig. 3a und 3b: Schnittansichten einer Ausführungsform einer erfindungsgemäßen Bewegungsvorrichtung, in Fig. 3a in der Betriebskonfiguration und in Fig. 3b in der Wartungskonfiguration,
- Fig. 4a und 4b: Schnittansichten einer Ausführungsform einer erfindungsgemäßen Bewegungsvorrichtung, in Fig. 4a in der Betriebskonfiguration und in Fig. 4b in der Wartungskonfiguration,
- Fig. 5a und 5b: Schnittansichten einer Ausführungsform einer erfindungsgemäßen Bewegungsvorrichtung, in Fig. 5a in der Betriebskonfiguration und in Fig. 5b in der Wartungskonfiguration,
- Fig. 6a und 6b: Schnittansichten einer Ausführungsform einer erfindungsgemäßen Bewegungsvorrichtung, in Fig. 6a in der Betriebskonfiguration und in Fig. 6b in der Wartungskonfiguration,
- Fig. 7a und 7b: Schnittansichten einer Ausführungsform einer erfindungsgemäßen Bewegungsvorrichtung, in Fig. 7a in der Betriebskonfiguration und in Fig. 7b in der Wartungskonfiguration,
- Fig. 8a und 8b: Schnittansichten einer Ausführungsform einer erfindungsgemäßen Bewegungsvorrichtung, in Fig. 8a in der Betriebskonfiguration und in Fig. 8b in der Wartungskonfiguration,
- Fig. 9a, 9b und 9c: verschiedene Ansichten einer Ausführungsform einer erfindungsgemäßen Bewegungsvorrichtung, wobei Fig. 9a eine Draufsicht auf mehrere Bahnabschnitte, Fig. 9b eine Seitenansicht mehrerer Bahnabschnitte und Fig. 9c einen Querschnitt der Bahn zeigt,
- Fig. 10: weitere Ausführungsformen einer erfindungsgemäßen Bewegungsvorrichtung, und
- Fig. 11 und 12: jeweils eine weitere Ausführungsform einer erfindungsgemäßen Bewegungsvorrichtung.

Zunächst ist festzuhalten, dass die dargestellten Ausführungsformen rein beispielhafter Natur sind. Die Merkmale einer Ausführungsform können auch beliebig mit Merkmalen einer oder mehrerer anderer Ausführungsformen kombiniert werden.

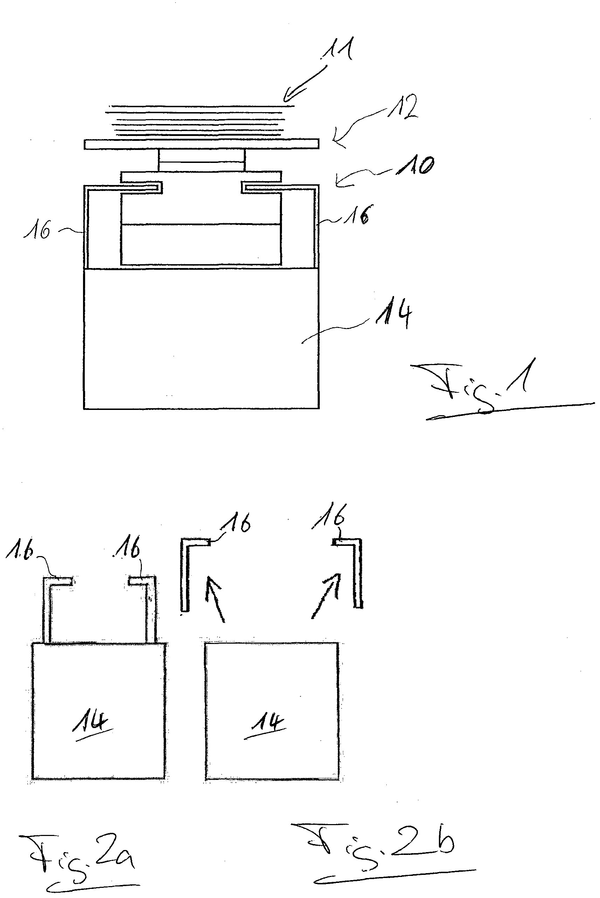

In Fig. 1 ist ein Querschnitt einer Bahn 10 gezeigt, welche zusammen mit einem oder mehreren Transportmovern 12 eine Vorrichtung zum Bewegen von Objekten 11, beispielsweise Lebensmittelportionen, bildet. Die Bahn umfasst einem Stator 14 und zwei dem Stator 14 zugeordnete Führungen 16. Die Objekte 11 liegen während des Transports auf dem Transportmover 12 auf.

In Fig. 1 befindet sich die Bahn 10 in einer Betriebskonfiguration, in welcher sich die Transportmover 12 entlang der Bahn 10 geführt bewegen können.

In Fig. 2a und 2b ist jeweils ein Querschnitt einer Bahn 10 gezeigt, wobei sich die Führungen 16 in Fig. 2a jeweils in ihrer Arbeitsstellung befinden, wohingegen in Fig. 2b die Führungen 16 jeweils aus der Arbeitsstellung herausbewegt worden sind, indem sie einfach vom Stator 14 abgenommen wurden.

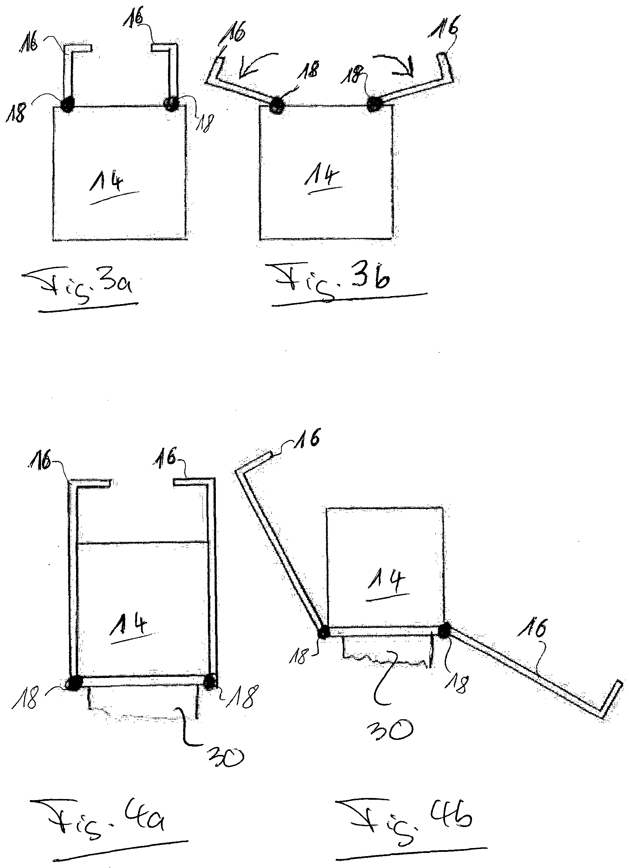

In Fig. 3a und 3b ist jeweils ein Querschnitt einer Bahn 10 gezeigt, wobei die Führungen 16 mit dem Stator 14 jeweils durch eine Gelenkverbindung 18 verbunden sind. In Fig. 3a befinden sich die Führungen 16 in ihrer Arbeitsstellung, wohingegen in Fig. 3b die Führungen 16 jeweils durch eine Schwenkbewegung aus den Arbeitsstellungen herausbewegt worden sind. In dieser Wartungskonfiguration der Bahn 10 können die Führungen 16 also an der Bahn 10 verbleiben.

Während gemäß Fig. 3a und 3b die Gelenkverbindungen 18 in einem oberen Bereich des Stators 14 angeordnet sind, erfolgt gemäß Fig. 4a und 4b eine gelenkige Verbindung der Führungen 16 mit dem Stator 14 in einem unteren Bereich, und zwar im Bereich eines Übergangs zwischen dem Stator 14 und einem nicht näher gezeigten Gestell 30. In der Wartungskonfiguration gemäß Fig. 4b ist folglich die Bahn 10 z.B. für eine Reinigung noch besser zugänglich.

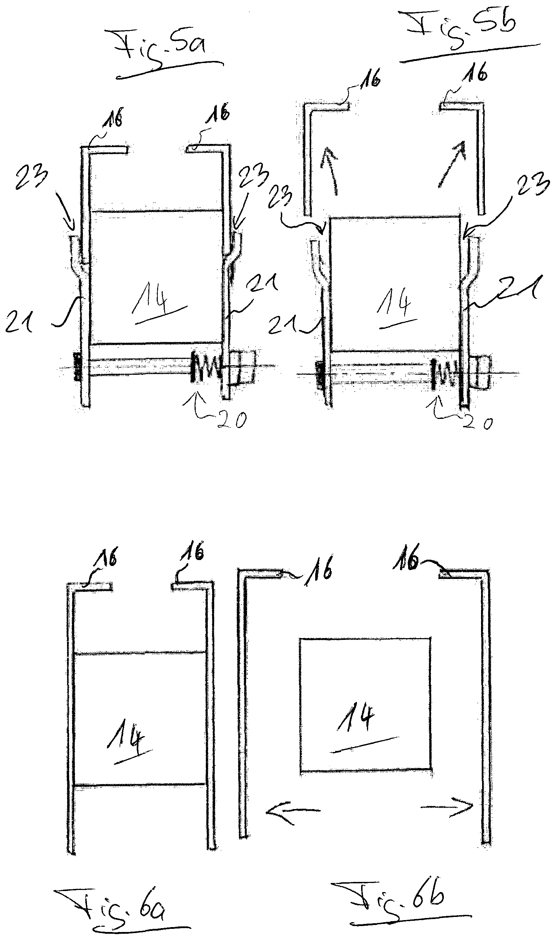

In Fig. 5a und 5b sind die Führungen 16 mit dem Stator 14 jeweils mittels einer Klemmeinrichtung 20 verbunden. Klemmelemente 21 der Klemmeinrichtung 20 bilden - in diesem Beispiel taschenartige - Aufnahmen 23 für die Führungen 16, in denen die Führungen 16 jeweils in der Arbeitsstellung gemäß Fig. 5a sicher fixiert sind. In Fig. 5b befindet sich die Klemmeinrichtung 20 in einer Freigabestellung, in welcher die Führungen 16 einfach aus den Aufnahmen 23 entfernt werden können.

In dem Ausführungsbeispiel der Fig. 6a und 6b erfolgt die Fixierung der Führungen 16 am Stator 14 durch Magnetkraft. Hierzu können die Führungen 16 oder der Stator 14 mit Permanentmagneten versehen sein. Des Weiteren sind die Führungen 16 und der Stator 14 mit nicht dargestellten Positionier- oder Ausrichthilfen versehen, die eine eindeutige Relativlage jeweils zwischen Führung 16 und Stator 14 festlegen, so dass eine exakte Führung der hier nicht dargestellten Transportmover sichergestellt ist. Die Führungen 16 können hier folglich schnell und einfach, nämlich werkzeuglos, abgenommen (Fig. 6b) und wieder zurück in ihre Arbeitsstellung am Stator 14 gebracht (Fig. 6a) werden.

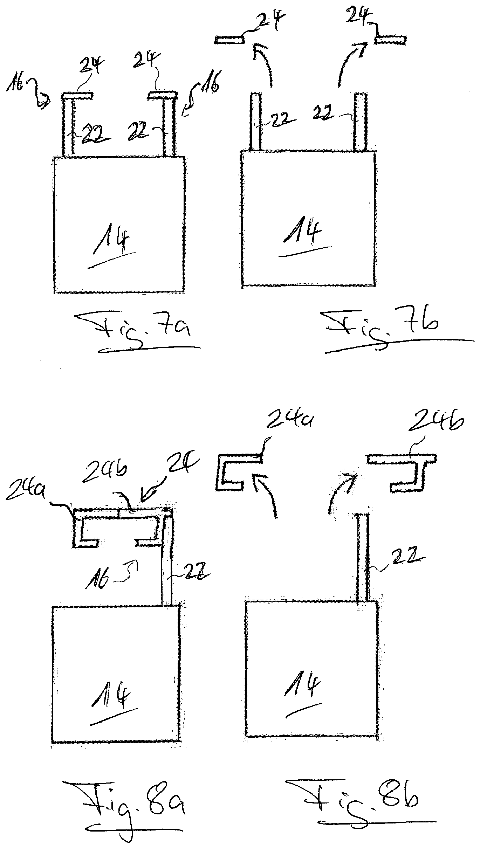

In Fig. 7a und 7b umfassen die Führungen 16 jeweils ein Führungselement 18 und einen fest mit dem Stator 14 verbundenen Träger 22, welcher das Führungselement 18 trägt. Das Führungselement 18 kann durch Abnehmen vom am Stator 14 verbleibenden Träger 22 aus seiner Arbeitsstellung gemäß Fig. 7a herausbewegt werden. Dieses Ausführungsbeispiel zeigt, dass die betreffenden Komponenten, hier die Führungen 16, jeweils nicht als Ganzes entfernt zu werden brauchen, d.h. dass es genügt, jeweils nur einen Teil der Führungen 16 zu entfernen, um die Bahn in die Wartungskonfiguration zu überführen.

In Fig. 8a und 8b umfasst die Führung 16 lediglich einen einzigen, an einer der Längsseiten fest mit dem Stator 14 verbundenen Träger 22, welcher ein mehrteiliges Führungselement 24 trägt. Diese Variante hat den Vorteil, dass in der Wartungskonfiguration der Bahn nur auf einer Seite ein Bauteil verbleibt, hier der Träger 22.

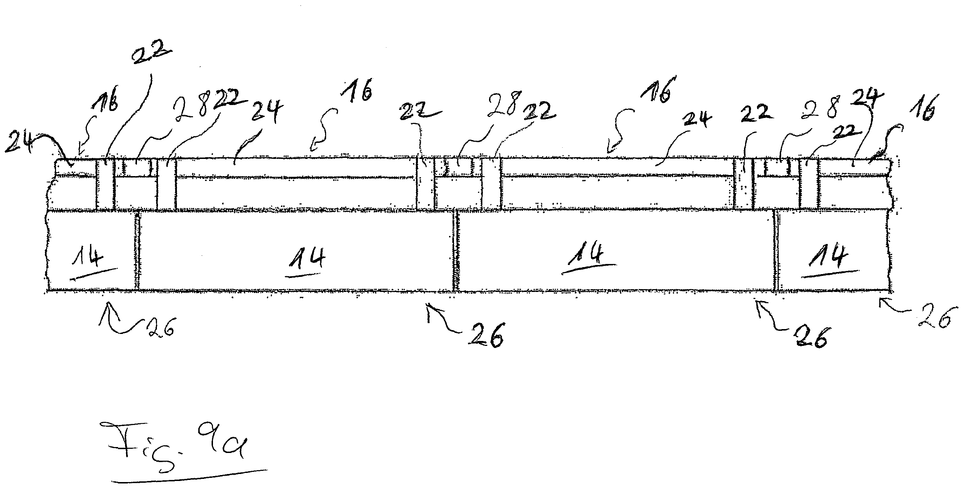

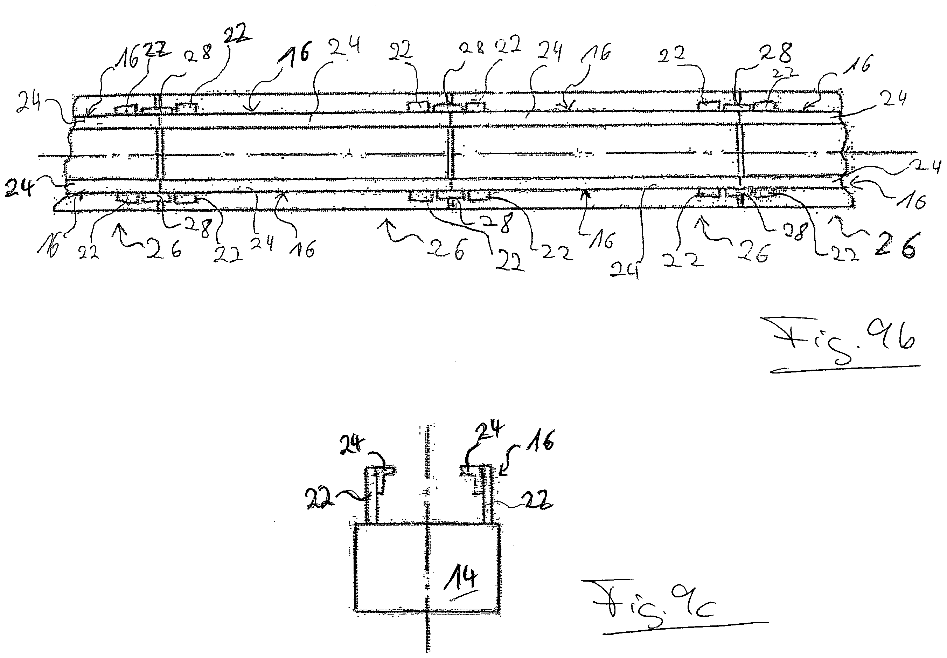

Gemäß Fig. 9a und 9b sind mehrere aufeinanderfolgende Bahnabschnitte 26, welche jeweils einen Stator 14 und eine Führung 16 umfassen, zu einer Bahn 10 verbunden. Jede Führung 16 umfasst Träger 22 und ein schienenartiges Führungselement 24. Fig. 9c zeigt eine entsprechende Querschnittsansicht.

Um ein Fluchten der Führungsschienen 24 an den Übergängen zwischen den Bahnabschnitten 26 zu gewährleisten, sind aufeinanderfolgende Führungsschienen 24 durch Überbrückungselemente 28 miteinander verbunden, welche die Führungsschienen 24 relativ zueinander ausrichten. Diese Überbrückungen 28 verhindern unter anderem, dass die Transportmover beim Übergang von einem Bahnabschnitt 26 in den nächsten Bahnabschnitt 26 durch nicht fluchtende Führungsschienen 24 behindert werden.

Mehrere aufeinanderfolgende Führungsschienen 24 können durch die Überbrückungselemente 28 miteinander verbunden bleiben, wenn die Führungsschienen 24 von der Bahn 10 abgenommen werden, um diese in eine Wartungskonfiguration zu überführen. An jenen Stellen, an denen die Verbindung zwischen aufeinanderfolgenden Führungsschienen 24 gelöst werden soll, kann jeweils ein Mechanismus vorgesehen sein, der ein gleichzeitiges Lösen der jeweiligen Überbrückung 28 und ein Lösen der Verbindungen zwischen den Führungsschienen 24 und dem Stator 14 ermöglicht.

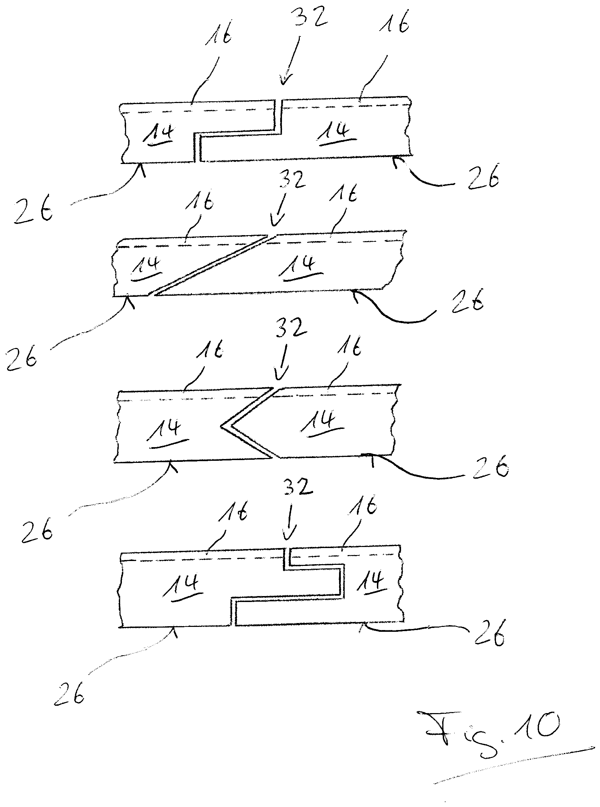

In Fig. 10 sind vier mögliche Ausgestaltungen gezeigt, wie Übergangsbereiche 32 zwischen unmittelbar aufeinanderfolgenden Bahnabschnitten in einem Bahnsystem einer erfindungsgemäßen Vorrichtung ausgestaltet sein können.

Jeder Bahnabschnitt 26 umfasst einen Stator 14 und eine Führung 16. Bei grundsätzlich beliebiger Ausgestaltung der Führungen 16 bzw. von möglicherweise im Bereich des Übergangs 32 oder auch an anderer Stelle vorgesehenen Übergängen zwischen unmittelbar aufeinanderfolgenden Abschnitten der Führungen 16 ist bei diesen Ausführungsbeispielen jeweils vorgesehen, dass sich die unmittelbar aufeinanderfolgenden Statoren 14 überlappen, und zwar derart, dass die Statoren 14 nach Art einer komplementären Verzahnung zumindest im Wesentlichen formschlüssig ineinander greifen. Der Verlauf des Übergangs ist grundsätzlich beliebig. Fig. 10 zeigt rein beispielhaft vier verschiedene Möglichkeiten.

Gemäß einer möglichen Ausgestaltung stellen die vier Darstellungen der Fig. 10 eine Draufsicht auf den Übergangsbereich 32 dar, d.h. die beiden Statoren 14 überlappen einander seitlich.

In einer alternativen Ausgestaltung können sich die unmittelbar aufeinanderfolgenden Statoren 14 auch in vertikaler Richtung überlappen. Derartige Ausgestaltungen sind in Fig. 10 dargestellt, wenn man die einzelnen Darstellungen als eine Seitenansicht betrachtet.

Damit offenbart Fig. 10 zwei alternative Ausgestaltungen der Erfindung - seitliche Überlappung bzw. vertikale Überlappung - jeweils mit vier möglichen Varianten.

Grundsätzlich sind auch geometrisch komplexere Überlappungen bzw. Verzahnungen denkbar, die sowohl eine seitliche Komponente als auch eine vertikale Komponente besitzen.

Eine seitliche Überlappung, also eine Betrachtung der Darstellungen in Fig. 10 jeweils als Draufsicht, ist bevorzugt.

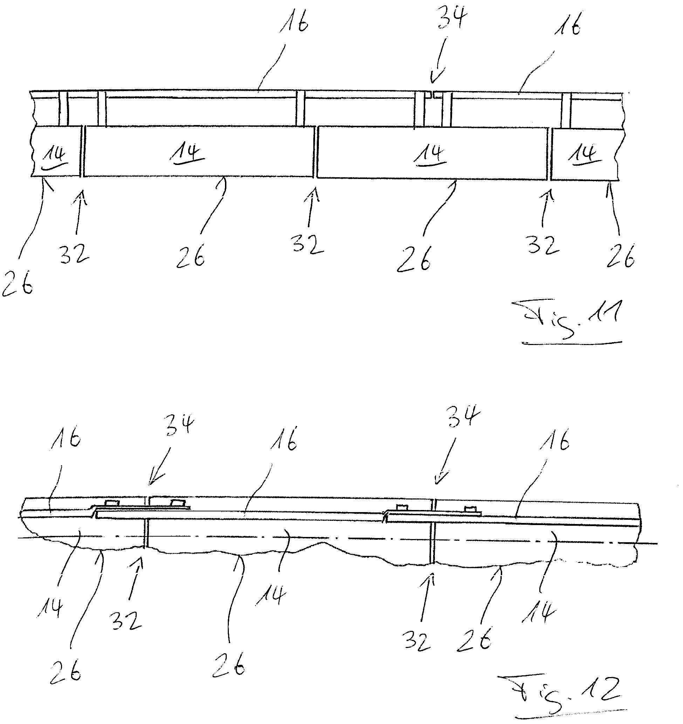

Die Fig. 11 und 12 zeigen jeweils mögliche Übergänge 34 zwischen unmittelbar aufeinanderfolgenden Führungsabschnitten 16 der Bahnabschnitte 26. Die Ausgestaltung dieser Übergangsbereiche 34 ist grundsätzlich unabhängig von der Ausgestaltung der Übergangsbereiche 32 zwischen unmittelbar aufeinanderfolgenden Statoren.

In dem Ausführungsbeispiel der Fig. 11, das eine Seitenansicht mehrerer unmittelbar aufeinanderfolgender Bahnabschnitte 26 zeigt, sind die Führungs-Übergänge 34 der dargestellten Seite der Führung 16 in Transportrichtung gegenüber den Übergängen 32 zwischen den Statoren 14 versetzt. Dies wird dadurch erreicht, dass sich die Führung 16 über den Stator-Übergang 32 hinweg erstreckt, aber vor dem nächsten Übergang 32 endet und mit einem sich in entgegengesetzter Richtung über den letztgenannten Übergang 32 hinweg erstreckenden Führungsabschnitt einen Führungs-Übergang 34 bildet, der innerhalb der Längserstreckung eines Statorabschnitts 14 gelegen ist.

Fig. 12 zeigt ein Ausführungsbeispiel, bei dem sich aufeinanderfolgende Führungsabschnitte im Übergangsbereich 34 seitlich überlappen. Im Überlappungsbereich können die Führungen 16 beispielsweise an einem Träger fixiert werden.

Analog zum Ausführungsbeispiel der Fig. 11 können auch in der Ausgestaltung gemäß Fig. 12 die Übergangsbereiche 34 zwischen den Führungen 16 in Transportrichtung gegenüber den Übergangsbereichen 32 zwischen den Statoren 14 versetzt sein.

In Fig. 12 ist eine nicht-verzahnte Überlappung dargestellt, d.h. die einander überlappenden Bereiche der Führungen 16 sind - anders als bei den Statorüberlappungen gemäß Fig. 10 - nicht im Sinne eines komplementären Formschlusses ausgebildet. Eine derartige verzahnte Überlappung mit einem komplementären Formschluss zur ununterbrochenen Fortführung des Querschnitts der Führungen - wie bei den Statorübergängen der Fig. 10 - ist aber alternativ auch für die Führungsübergänge 34 gemäß Fig. 12 möglich.

### Bezugszeichenliste

- 10: Bahn
- 11: Objekt
- 12: Transportmover
- 14: Stator
- 16: Führung
- 18: Gelenkverbindung
- 20: Klemmeinrichtung
- 21: Klemmelement
- 22: Träger
- 23: Aufnahme
- 24: Führungselement
- 24a: Teil des Führungselementes
- 24b: Teil des Führungselementes
- 26: Bahnabschnitt
- 28: Überbrückung
- 30: Gestell
- 32: Übergangsbereich der Statoren
- 34: Übergangsbereich der Führungen

## Patentansprüche

1. Vorrichtung zum Bewegen von Objekten (11), insbesondere von Lebensmittelprodukten,
mit einer Mehrzahl von individuell bewegbaren Transportmovern (12) zum Transport der Objekte (11),
mit einem Bahnsystem für die Transportmover (12), in welchem die Transportmover (12) entlang wenigstens einer vorgegebenen Bahn (10) bewegbar sind, und
mit einer Steuereinrichtung zum Steuern der Bewegungen der Transportmover (12) in dem Bahnsystem,
wobei die Bahn (10) einen Stator (14) und eine zugeordnete Führung (16) für die Transportmover (12) umfasst,
**dadurch gekennzeichnet,**
**dass** die Bahn (10) zumindest abschnittsweise von einer Betriebskonfiguration in eine Wartungskonfiguration überführbar ist, in der zumindest eine Komponente (16, 24) der Bahn (10) aus ihrer einem Transportbetrieb entsprechenden Arbeitsstellung relativ zum Stator (14) herausbewegt ist, wobei die Komponente (16, 24) in der Arbeitsstellung ohne zusätzliche mechanische Verbindungsmittel, insbesondere an einer ihr zugeordneten Aufnahme an der Bahn (10), fixiert ist, und/oder dass eine in der Arbeitsstellung wirksame Fixierung der Komponente (16, 24) werkzeuglos lösbar ist.

2. Vorrichtung nach Anspruch 1,
**dadurch gekennzeichnet,**
**dass** die Komponente die Führung (16) oder zumindest ein Teil (24) der Führung (16) ist.

3. Vorrichtung nach Anspruch 1 oder 2,
**dadurch gekennzeichnet,**
**dass** die Komponente (16, 24) sowohl in ihrer der Betriebskonfiguration der Bahn (10) entsprechenden Arbeitsstellung als auch in einer der Wartungskonfiguration der Bahn (10) entsprechenden Wartungsstellung verbunden und zwischen der Arbeitsstellung und der Wartungsstellung verstellbar ist, insbesondere durch eine Verstellbewegung, die zumindest eine reine Schwenk- oder Linearbewegung und/oder die eine kombinierte Freigabe- und Stellbewegung umfasst.

4. Vorrichtung nach einem der vorhergehenden Ansprüche,
**dadurch gekennzeichnet,**
**dass** eine, insbesondere Formschlussmittel umfassende, Positionierhilfe vorgesehen ist, durch welche eine Sollposition der Komponente (16, 24) in der Arbeitsstellung vorgegeben und insbesondere gesichert ist.

5. Vorrichtung nach einem der vorhergehenden Ansprüche,
**dadurch gekennzeichnet,**
**dass** die Komponente (16, 24) in der Arbeitsstellung durch magnetische Kräfte, durch eine Rast-, Steck-, Klemm- oder Schnappverbindung, oder durch eine Gelenkverbindung fixiert ist, wobei insbesondere die Fixierung der Komponente (16, 24) zumindest auch durch ihr Eigengewicht bewirkt wird.

6. Vorrichtung nach einem der vorhergehenden Ansprüche,
**dadurch gekennzeichnet,**
**dass** eine oder die Steuereinrichtung zu einer Zustandsüberwachung zumindest eines Bahnabschnitts ausgebildet ist, wobei die Steuereinrichtung zu einer Unterscheidung zwischen der Betriebskonfiguration und der Wartungskonfiguration sowie zur Einleitung vorgegebener Maßnahmen in Abhängigkeit von dem jeweils erfassten Zustand in der Lage ist.

7. Vorrichtung nach einem der Ansprüche 2 bis 6,
**dadurch gekennzeichnet,**
**dass** sich die Bahn (10) zumindest in einem Teilbereich in mehrere lösbar miteinander verbundene Bahnabschnitte untergliedert, wobei die Führungen (16) unmittelbar aufeinander folgender Bahnabschnitte jeweils durch wenigstens eine Überbrückung (28) miteinander verbunden sind, und wobei die Überbrückungen (28) jeweils werkzeuglos lösbar sind, insbesondere wobei für das Lösen der Überbrückungen (28) und das Herausbewegen der Komponente (16, 24) aus der Arbeitsstellung heraus ein gemeinsamer Mechanismus vorgesehen ist.

8. Vorrichtung nach einem der vorhergehenden Ansprüche,
**dadurch gekennzeichnet,**
**dass** sich die Bahn (10) zumindest in einem Teilbereich in mehrere lösbar miteinander verbundene Bahnabschnitte untergliedert, die jeweils zumindest einen Stator (14) und eine Führung (16) aufweisen, wobei die Führungen (16) zumindest einiger Bahnabschnitte gemeinsam und/oder unabhängig voneinander aus der Arbeitsstellung herausbewegbar sind.

9. Vorrichtung zum Bewegen von Objekten (11), insbesondere von Lebensmittelprodukten,
mit einer Mehrzahl von individuell bewegbaren Transportmovern (12) zum Transport der Objekte (11),
mit einem Bahnsystem für die Transportmover (12), in welchem die Transportmover (12) entlang wenigstens einer vorgegebenen Bahn (10) bewegbar sind, und
mit einer Steuereinrichtung zum Steuern der Bewegungen der Transportmover (12) in dem Bahnsystem,
wobei die Bahn (10) einen Stator (14) und eine zugeordnete Führung (16) für die Transportmover (12) umfasst,
insbesondere nach einem der vorhergehenden Ansprüche,
**dadurch gekennzeichnet,**
**dass** zumindest die Führung (16) der Bahn (10) eine Mehrzahl von Führungsabschnitten umfasst, wobei zumindest ein Führungsabschnitt dazu ausgebildet ist, während des Transportbetriebs für die Transportmover (12) zumindest ein Betriebsmittel, insbesondere ein Schmiermittel, Reinigungsmittel oder Desinfektionsmittel, bereitzustellen.

10. Vorrichtung nach Anspruch 9,
**dadurch gekennzeichnet,**
**dass** der Führungsabschnitt einen Betriebsmittelvorrat beinhaltet und/oder an eine Betriebsmittelzufuhr angeschlossen oder anschließbar ist und/oder dass der Führungsabschnitt zur Abgabe des Betriebsmittels zumindest bereichsweise mit Abgabeöffnungen versehen und/oder porig ausgebildet ist.

11. Bahnabschnitt einer Bahn (10) für eine Vorrichtung nach zumindest einem der vorhergehenden Ansprüche,
mit einem Stator (14) und einer zugeordneten Führung (16) für die Transportmover (12),
wobei der Bahnabschnitt (26) von einer Betriebskonfiguration in eine Wartungskonfiguration überführbar ist, in der zumindest eine Komponente (16, 24) des Bahnabschnitts (26) aus ihrer einem Transportbetrieb entsprechenden Arbeitsstellung relativ zum Stator (14) herausbewegt ist, und
wobei der Bahnabschnitt (26) die kennzeichnenden Merkmalen zumindest eines der Ansprüche 1 bis 8 aufweist.

## Claims

1. An apparatus for moving objects (11), in particular food products, having a plurality of individually movable transport movers (12) for the transport of the objects (11);
having a path system for the transport movers (12) in which the transport movers (12) are movable along at least one predefined path (10); and having a control device for controlling the movements of the transport movers (12) in the path system,
wherein the path (10) comprises a stator (14) and an associated guide (16) for the transport movers (12),
**characterized in that**
the path (10) can be transitioned at least sectionally from an operating configuration into a service configuration in which at least one component (16, 24) of the path (10) is moved relative to the stator (14) out of its working position corresponding to a transport operation,
with the component (16, 24) being fixed in the working position without additional mechanical connection means, in particular at a mount associated with it at the path (10); and/or **in that** a fixing of the component (16, 24) effective in the working position is releasable without tools.

2. An apparatus in accordance with claim 1,
**characterized in that**
the component is the guide (16) or at least a part (24) of the guide (16).

3. An apparatus in accordance with claim 1 or claim 2,
**characterized in that**
the component (16, 24) is connected both in its working position corresponding to the operating configuration of the path (10) and in a servicing position corresponding to the service configuration of the path (10) and is adjustable between the working position and the servicing position, in particular by an adjustment movement which comprises at least a pure pivoting movement or linear movement and/or which comprises a combined release and adjustment movement.

4. An apparatus in accordance with any one of the preceding claims, **characterized in that**
a positioning aid is provided which in particular comprises shape-matching means and by which a desired position of the component (16, 24) is predefined and is in particular secured in the working position.

5. An apparatus in accordance with any one of the preceding claims, **characterized in that**
the component (16, 24) is fixed in the working position by magnetic forces, by a latching connection, a plug-in connection, a clamping connection or a snap-in connection or by an articulated connection, with in particular the fixing of the component (16, 24) being at least also effected by its own weight.

6. An apparatus in accordance with any one of the preceding claims, **characterized in that**
a or the control device is configured for a condition monitoring of at least one path section, with the control device being able to distinguish between the operating configuration and the service configuration as well as to initiate predefined measures in dependence on the respective detected condition.

7. An apparatus in accordance with any one of the claims 2 to 6, **characterized in that**
the path (10) is subdivided in at least one part region into a plurality of path sections releasably connected to one another, with the guides (16) of directly consecutive path sections each being connected to one another by at least one bridge (28), and with the bridges (28) each being releasable without tools, in particular with a common mechanism being provided for the release of the bridges (28) and the moving of the component (16, 24) out of the working position.

8. An apparatus in accordance with any one of the preceding claims, **characterized in that**
the path (10) is subdivided in at least one part region into a plurality of path sections which are releasably connected to one another and which each have at least one stator (14) and one guide (16), with the guides (16) of at least some path sections being able to be moved out of the working position together and/or independently of one another.

9. An apparatus for moving objects (11), in particular food products, having a plurality of individually movable transport movers (12) for the transport of the objects (11);
having a path system for the transport movers (12) in which the transport movers (12) are movable along at least one predefined path (10); and having a control device for controlling the movements of the transport movers (12) in the path system,
wherein the path (10) comprises a stator (14) and an associated guide (16) for the transport movers (12),
in particular in accordance with any one of the preceding claims, **characterized in that**
at least the guide (16) of the path (10) comprises a plurality of guide sections, with at least one guide section being configured to provide at least one consumable, in particular a lubricant, a cleansing agent or a disinfectant, for the transport movers (12) during the transport operation.

10. An apparatus in accordance with claim 9,
**characterized in that**
the guide section includes a consumable store and/or is connected or connectable to a consumable supply; and/or **in that** the guide section is provided at least regionally with dispensing openings and/or is configured as porous for dispensing the consumable.

11. A path section of a path (10) for an apparatus in accordance with at least one of the preceding claims,
having a stator (14) and an associated guide (16) for the transport movers (12),
wherein the path section (26) can be transitioned from an operating configuration into a service configuration in which at least one component (16, 24) of the path section (26) is moved relative to the stator (14) out of its working position corresponding to a transport operation; and
wherein the path section (26) has the characterizing features of at least one of the claims 1 to 8.

## Revendications

1. Dispositif pour déplacer des objets (11), en particulier des produits alimentaires, comportant
une pluralité d'organes de transport (12) mobiles individuellement pour transporter les objets (11),
un système de voie pour les organes de transport (12), dans lequel les organes de transport (12) sont mobiles le long d'au moins une voie donnée (10), et
un moyen de commande pour commander les mouvements des organes de transport (12) dans le système de voie,
la voie (10) comprenant un stator (14) et un guidage associé (16) pour les organes de transport (12),
**caractérisé en ce que**
la voie (10) peut être transférée au moins localement d'une configuration de fonctionnement à une configuration d'entretien dans laquelle au moins un composant (16, 24) de la voie (10) est déplacé par rapport au stator (14) hors de sa position de travail correspondant à un mode de transport,
le composant (16, 24) étant fixé en position de travail sans moyens de liaison mécaniques supplémentaires, en particulier à un logement qui lui est associé sur la voie (10), et/ou **en ce que**
une fixation des composants (16, 24) qui agit en position de travail peut être détachée sans outil.

2. Dispositif selon la revendication 1,
**caractérisé en ce que**
ledit composant est le guidage (16) ou au moins une partie (24) du guidage (16).

3. Dispositif selon la revendication 1 ou 2,
**caractérisé en ce que**
le composant (16, 24) est relié aussi bien dans sa position de travail correspondant à la configuration de fonctionnement de la voie (10) que dans une position d'entretien correspondant à la configuration d'entretien de la voie (10) et est réglable entre la position de travail et la position d'entretien, en particulier par un mouvement de réglage qui inclut au moins un mouvement purement pivotant ou linéaire et/ou qui inclut un mouvement combiné de libération et de positionnement.

4. Dispositif selon l'une des revendications précédentes,
**caractérisé en ce que**
il est prévu un organe d'aide au positionnement, comprenant en particulier des moyens de coopération de forme, par lequel une position de consigne du composant (16, 24) en position de travail est prédéfinie et en particulier sécurisée.

5. Dispositif selon l'une des revendications précédentes,
**caractérisé en ce que**
le composant (16, 24) en position de travail est fixé par des forces magnétiques, par une liaison par enclenchement, par enfichage, par serrage ou par encliquetage, ou par une liaison articulée, en particulier, la fixation du composant (16, 24) étant assurée au moins également par son propre poids.

6. Dispositif selon l'une des revendications précédentes,
**caractérisé en ce que**
un ou le moyen de commande est réalisé pour surveiller l'état d'au moins un tronçon de la voie, le moyen de commande étant apte à faire une distinction entre la configuration de fonctionnement et la configuration d'entretien, et à prendre des mesures prédéfinies en fonction de l'état respectif détecté.

7. Dispositif selon l'une des revendications 2 à 6,
**caractérisé en ce que**
la voie (10) se subdivise, au moins dans une zone partielle, en plusieurs tronçons de voie reliés entre eux de manière détachable, les guidages (16) de tronçons de voie directement successifs étant reliés entre eux par au moins un pontage respectif (28), et les pontages (28) étant chacun détachables sans outil, et, en particulier, pour le détachement des pontages (28) et pour le déplacement du composant (16, 24) hors de la position de travail, il est prévu un mécanisme commun.

8. Dispositif selon l'une des revendications précédentes,
**caractérisé en ce que**
la voie (10) se subdivise, au moins dans une zone partielle, en plusieurs tronçons de voie reliés entre eux de manière détachable, qui présentent chacun au moins un stator (14) et un guidage (16), les guidages (16) de quelques-uns au moins des tronçons de voie pouvant être déplacés conjointement et/ou indépendamment les uns des autres hors de la position de travail.

9. Dispositif pour déplacer des objets (11), en particulier des produits alimentaires, comportant
une pluralité d'organes de transport (12) mobiles individuellement pour transporter les objets (11),
un système de voie pour les organes de transport (12), dans lequel les organes de transport (12) sont mobiles le long d'au moins une voie donnée (10), et
un moyen de commande pour commander les mouvements des organes de transport (12) dans le système de voie,
la voie (10) comprenant un stator (14) et un guidage associé (16) pour les organes de transport (12),
en particulier selon l'une des revendications précédentes,
**caractérisé en ce que**
au moins le guidage (16) de la voie (10) comprend une pluralité de tronçons de guidage, au moins un tronçon de guidage étant réalisé pour mettre à disposition des organes de transport (12), en mode de transport, au moins un fluide de fonctionnement, en particulier un lubrifiant, un nettoyant ou un désinfectant.

10. Dispositif selon la revendication 9,
**caractérisé en ce que**
le tronçon de guidage contient une réserve de fluide de fonctionnement et/ou est raccordé ou peut être raccordé à une alimentation en fluide de fonctionnement, et/ou **en ce que**
le tronçon de guidage est pourvu au moins localement d'ouvertures de distribution et/ou est réalisé de manière poreuse pour la distribution du fluide de fonctionnement.

11. Tronçon de voie d'une voie (10) pour un dispositif selon l'une au moins des revendications précédentes,
comportant un stator (14) et un guidage associé (16) pour les organes de transport (12),
dans lequel
le tronçon de voie (26) peut être transféré d'une configuration de fonctionnement à une configuration d'entretien dans laquelle au moins un composant (16, 24) du tronçon de voie (26) est déplacé par rapport au stator (14) hors de sa position de travail correspondant à un mode de transport, et
le tronçon de voie (26) présente les caractéristiques distinctives selon l'une au moins des revendications 1 à 8.
